# EUROPEAN PATENT SPECIFICATION

(11) **EP 1 919 706 B1**
(45) Date of publication and mention of the grant of the patent: **12.06.2013**
(21) Application number: 06777114.7
(22) Date of filing: 30.08.2006
(51) Int. Cl.: B32B 27/32

(54) **FILM**
FOLIE
FILM

(30) Priority: 30.08.2005 EP 05255307
(43) Date of publication of application: 14.05.2008
(73) Proprietor: Borealis Technology Oy, 06101 Porvoo (FI)
(72) Inventor: NILSEN, Jorunn, N-3930 Porsgrunn (NO); DAVIKNES, Hans Georg, Stathelle (NO); KVAMME, Lars Inge, N-3970 Langesund (NO); NIEDERSÜSS, Peter, A-4312 Ried/Riedmark (AT)
(74) Representative: Campbell, Neil Boyd
(86) International application number: PCT/EP2006/008466
(87) International publication number: WO 2007/025727

(56) References cited:
- EP-A- 1 008 446
- EP-A- 1 238 796
- WO-A2-2004/098868
- US-A1- 2003 027 008
- US-B1- 6 492 010
- DATABASE WPI Section Ch, Week 199732 Derwent Publications Ltd., London, GB; Class A17, AN 1997-346216 XP002351749 & JP 09 141793 A (TOSOH CORP) 3 June 1997 (1997-06-03)

## Description

This invention relates to a multilayer film which can be formed into a laminate. The film has excellent mechanical properties whilst being remarkably thin. In particular, the invention concerns a multilayer film comprising a core layer of polypropylene and metallocene produced linear low density polyethylene (mLLDPE) with outer layers of mLLDPE and preferably low density polyethylene (LDPE).

The use of films to form laminates is well known. Laminates are used widely in the packaging industry to form all manner of articles from food containers, to standing detergent pouches and product labels. These laminates are typically transparent and are formed when a film is coated onto a substrate. Films used in this fashion need to possess certain properties to be of use in the industry. The film needs excellent optical properties, i.e. low haze, so as to be sufficiently transparent. The film needs to possess high levels of gloss to give off the necessary aesthetic appearance. It should also be capable of being printed upon.

The film (which is conventionally multilayered) needs to adhere to the substrate on which it is placed and the layers of film also need to adhere to each other without themselves delaminating. Critically, the film needs to be stiff, e.g. possess a high tensile modulus, in order to be used successfully. Finally, the film must also be capable of being manufactured rapidly and cheaply. Since the margins on many packaging products are small, it is important that packaging costs are kept to a very minimum.

In this regard therefore, it is obvious that thinner films are preferred since such films will be cheaper to manufacture as they require less raw material. However, the down gauging of films (i.e. making them thinner) is typically associated with a considerable loss of stiffness. The resulting films are simply not stiff enough to be of use in laminates. If a film lacks stiffness, it will cause problems in the lamination process. Such a film may be too soft to adhere successfully to a substrate or may be too delicate to handle in the lamination apparatus. At present therefore, films made from polyethylene are often combined with HDPE in the core layer to improve stiffness. HDPE however gives lower transparency and is not therefore favourable. There is therefore a trade off between stiffness and transparency. At the moment therefore, polyethylene films for lamination are manufactured at around 85 to 100 microns in thickness. This is the thinnest they can be made without loss of stiffness/optical properties.

Laminates currently available on the market typically comprise trilayer films comprising LDPE in the outer layers and HDPE in the core layer. The LDPE is well known to improve the optical properties of films and HDPE provides strength and stiffness. Such films are however not possible to down gauge as the resulting film lacks sufficient stiffness for label applications.

In an alternative approach, EP-A-1238796 discloses a multilayer film having a core layer made from a blend of polypropylene and metallocene produced LLDPE, a first outer layer of LLDPE or LDPE and a second outer layer of polypropylene. EP-A-1238796 is, however, completely silent on the stiffness (e.g. tensile modulus) and haze properties of its films. In particular, EP-A-1238796 does not in any way teach that very thin films having sufficient stiffness to be used in laminates can be provided.

EP 1 008 446 A discloses a multilayer composite film of food grade quality, comprising a middle layer based on polypropylene that is sandwiched between two outside layers of LLDPE, preferably a Dow Elite 5110 product, the density of which is between 0.919 and 0.930 g/cm³. Said middle layer contains 50-70% by weight of polypropylene, 10-30% by weight of a LLDPE resin identical to the one used in the outer layers and 10-30% by weight of a thermoplastic polyolefin.

There remains therefore a need to devise alternative film formulations which can provide films of very low thickness whilst maintaining tensile modulus, optical properties like gloss and transparency and other mechanical properties.

The present inventors considered a number of potential solutions to this problems. They considered the use of polypropylene in the core layer of a multilayer film but experience suggests that delamination of the core layers and outer layers would be a major problem. Whilst LDPE might reduce the problem of delamination in such a composition, degradation may then becomes a serious issue due to the very different melting temperatures of LDPE and polypropylene. Moreover, if pure LDPE is employed in the outer layer, degradation become a serious issue when the core layer consist of polypropylene, due to the very different melting temperature between LDPE and PP. There is no overlap in processing temperatures for these materials.

It has now been surprisingly found that a particular multilayer film comprising at least three layers can fulfil the above requirements. The film comprises two outer layers which are preferably identical and comprise a single site catalyst produced, preferably metallocene catalysed LLDPE component (an mLLDPE), and a LDPE component, and a core layer, i.e. a layer sandwiched between two outer layers, comprising a polypropylene homo or copolymer and a mLLDPE component.

It has been found that the presence of the mLLDPE component in the core layer prevents delamination from the outer layers. Also, the use of the mLLDPE polymer ensures there is overlap in the processing window of the core layer polymers. The mLLDPE/LDPE mixture employed in the outer layer improves haze whilst the mLLDPE again ensures excellent internal adhesiveness as well as providing adhesion to an external surface. Further the preferred use of an LDPE component in the outer layers enhances processability.

Finally, the polypropylene provides stiffness to the film. The film of the invention is also useful at very narrow film thicknesses. In fact it has been surprisingly found that the stiffness of the films of the invention actually increases as the film thickness is reduced, for example, in the range 20 to 100 µm, especially in the range 40-80 µm.

Thus, viewed from one aspect, the invention provides a multilayer film comprising at least three layers, two outer layers and a core layer, each outer layer independently comprising at least 50wt% of a single site catalyst produced LLDPE component having a density of less than 940 kg/m³ and 3 to 50 wt% of an LDPE component and said core layer comprising at least 50 wt% of a polypropylene component and up to 50 wt% of a single site catalyst produced LLDPE component having a density of less than 940 kg/m³.

Viewed from another aspect the invention provides a process for the preparation of a multilayer film as hereinbefore described comprising coextruding at least 50 wt% of a single site catalyst produced LLDPE component having a density of less than 940 kg/m³, and 3 to 50 wt% of a LDPE component, to form two outer layers and at least 50 wt% of a polypropylene component andr up to 50 wt% of a single site catalyst produced LLDPE component having a density of less than 940 kg/m³ to form a core layer.

Viewed from another aspect the invention provides use of a multilayer film as hereinbefore described in packaging.

Viewed from another aspect the invention provides a laminate comprising a film as hereinbefore described coated onto a substrate.

The multilayer film of the invention has at least three layers, e.g. 3, 5, 7 or 11 layers. Preferably however the film should comprise only three layers, two outer layers and a core layer. By core layer is meant a non outer layer, i.e. the core layer is not on the surface of the formed film but is sandwiched between the outer layers.

The outer layers may have differing compositions although preferably the outer layers should be identical. At least one of the outer layers acts as a surface layer and should therefore be glossy and haze free. It may also carry a logo, instructions for use of the product, ingredient list etc. Typically however, the film layer which is printed upon is the layer which is laminated. Any layer which is printed upon may need corona treatment to allow adhesion of the necessary dye as is known in the art.

The other outer layer may be laminated onto a substrate such as paper, aluminium foil, other polymer substrates such as BOPP etc. This can be achieved using any conventional adhesive. Suitable adhesives are known in the art.

The outer layers comprise a single site catalyst produced linear low density polyethylene, preferably a metallocene produced linear low density polyethylene (mLLDPE), component having a density of less than 940 kg/m³. and a low density polyethylene component made in a high pressure radical process.

The single site catalyst produced LLDPE, e.g. mLLDPE, may be multimodal, e.g. bimodal but is preferably unimodal.

In general a multimodal LLDPE comprises at least a lower molecular weight component (LMW) and a higher molecular weight (HMW) component.

Usually a LLDPE polymer comprising at least two polyethylene fractions, which have been produced under different polymerisation conditions resulting in different (weight average) molecular weights and molecular weight distributions for the fractions, is referred to as "multimodal". The prefix "multi" relates to the number of different polymer fractions present in the polymer. Thus, for example, a polymer consisting of two fractions only is called "bimodal". The form of the molecular weight distribution curve, i.e. the appearance of the graph of the polymer weight fraction as a function of its molecular weight, of a multimodal LLDPE will show two or more maxima or at least be distinctly broadened in comparison with the curves for the individual fractions. For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

By unimodal is meant that the molecular weight profile of the polymer comprises a single peak.

The LLDPE's of use in the outer layer should form at least 50% by weight, e.g. at least 60% wt, preferably at least 70 wt% of each outer layer. In some embodiments the LLDPE's form at least 75 %wt of the outer layer.

The LLDPE of use in the outer layers has a density of less than 940 kg/m³, e.g. 905-940 kg/m³, preferably in the range of from 915 to 934 kg/m³. e.g. 920 to 930 kg/m³ (ISO 1183).

The LLDPE of the outer layers is formed from ethylene along with at least one C₃₋₁₂ alpha-olefin comonomer, e.g. 1-butene, 1-hexene or 1-octene. Preferably, the LLDPE is an ethylene hexene copolymer, ethylene octene copolymer or ethylene butene copolymer. The amount of comonomer incorporated is preferably 2 to 10 wt% relative to ethylene, especially 4 to 8 wt%.

The MFR₂ (melt flow rate ISO 1133 at 190°C under a load of 2.16 kg) of the LLDPE should preferably be in the range 0.5 to 10, preferably 0.8 to 6.0, e.g. 0.9 to 2.0 g/10min.

The LLDPE should preferably have a weight average molecular weight (Mw) of 100,000-250,000, e.g. 110,000-160,000 (GPC). The Mw/Mn (MWD) value should preferably be 2 to 20, e.g. 2.0 to 4.0, preferably 3.0 to 3.5 (GPC).

As suitable single site produced LLDPEs (mLLDPEs) any suitable mLLDPE having the claimed density range, and preferably having e.g. at least one of MFR₂ and/or comonomer contents as mentioned above, can be used, e.g. a commercially available mLLDPE or an mLLDPE obtainable according to or analogously to known polymerisation processes disclosed in the literature.

The LLDPE is manufactured using well known polymerisation chemistry e.g. as described in numerous earlier patent applications. The polymerisation can be effected in solution, slurry or gas phase under standard conditions using a wide variety of different metallocene catalysts and cocatalysts. Single site produced LLDPE's, e.g. metallocene produced LLDPE's are readily distinguishable from Ziegler-Natta produced LLDPE's. These catalysts give rise to very different properties in the polymer (e.g. different molecular weight distributions, comonomer incorporation, composition distribution index, branching properties etc). Metallocenes of use include alkylsubstituted bis cyclopentadienyl and indenyl complexes often employed with methyl aluminoxane as cocatalyst.

Unimodal single site produced LLDPE (e.g. mLLDPE) is preferably prepared using a single stage polymerisation, preferably a slurry polymerisation in slurry tank or loop reactor in a manner well known in the art. Preferably the unimodal mLLDPE is produced in a loop reactor. For the general principles reference is made below to the polymerisation of low molecular weight component in a multistage process with the exception that the process conditions (e.g. hydrogen and comonomer feed) are adjusted to provide the properties of the final polymer. Suitable single site produced LLDPE's are available commercially from Borealis and other suppliers.

Multimodal single site produced LLDPE polymers may be prepared for example by two or more stage polymerization or by the use of two or more different polymerization catalysts in a one stage polymerization. It is important to ensure that the higher and lower molecular weight components are intimately mixed prior to extrusion. This is most advantageously achieved by using a multistage process.

Preferably the multimodal LLDPE is produced in a two-stage polymerization using the same single site catalyst, e.g. a metallocene catalyst. Thus, two slurry reactors or two gas phase reactors could be employed. Preferably however, the multimodal LLDPE is made using a slurry polymerization in a loop reactor followed by a gas phase polymerization in a gas phase reactor.

A loop reactor - gas phase reactor system is marketed by Borealis as a BORSTAR reactor system. Any multimodal LLDPE of use in the outer layer is thus preferably formed in a two stage process comprising a first slurry loop polymerisation followed by gas phase polymerisation.

The conditions used in such a process are well known. For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerization may if desired be effected under supercritical conditions. Slurry polymerisation may also be carried out in bulk where the reaction medium is formed from the monomer being polymerised.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer (e.g. ethylene).

Preferably, the lower molecular weight polymer fraction is produced in a continuously operating loop reactor where ethylene is polymerised in the presence of a polymerization catalyst as stated above and a chain transfer agent such as hydrogen. The diluent is typically an inert aliphatic hydrocarbon, preferably isobutane or propane.

The higher molecular weight component can then be formed in a gas phase reactor using the same catalyst.

Both for uni- and multimodal mLLDPE, metallocene catalysis is preferably used. The preparation of the metallocene catalyst can be carried out according or analogously to the methods known from the literature and is within skills of a person skilled in the field. Thus for the preparation of catalyst and mLLDPE see e.g. EP-A-129 368, WO-A-9856831, WO-A-0034341, EP-A-260 130, WO-A-9728170, WO-A-9846616, WO-A-9849208, WO-A-9912981, WO-A-9919335, WO-A-9856831, WO-A-00/34341, EP-A-423 101 and EP-A-537 130. WO2005/002744 describes a preferable catalyst and process for preparing the mLLDPE component.

For the preparation of multimodal mLLDPE, a preferred catalyst and polymerisation process is disclosed in WO2005/002744.

In one preferred embodiment unimodal mLLDPE is used.

The outer layers of the multilayer film of the invention also comprise LDPE. LDPE is an ethylene homopolymer and is a prepared using a well-known high pressure radical process as will be known to the skilled man. The skilled polymer chemist appreciates that LDPE is a term of the art.

The amount of LDPE present ranges from 3 to 50% wt, e.g. 10 to 40% by weight, preferably 15 to 30 wt% of the outer layer in question. The LDPE may have a density of 915-935 kg/m³, especially 920-930 kg/m³. The MFR₂ of the LDPE may range from 0.3 to 4 g/10min, e.g. 0.5 to 2.5 g/10 min, e.g. 1.0 to 2.0 g/10 min. Also preferably, MFR₂ of the LDPE may range from 0.5 to 2.0 g/10 min.

Suitable LDPE's are available commercially from Borealis AS and other suppliers.

The outer layer may also contain minor amounts of conventional additives such as antioxidants, UV stabilisers, acid scavengers, nucleating agents, anti-blocking agents etc. Especially preferably, the outer layers comprise polymer processing additive (PPA). PPA's are typically used at very low levels to improve processing of thermoplastics. They are especially important when metallocene produced polymers are employed as such polymers tend to have poorer processability than Ziegler-Natta produced materials.

A preferred PPA is a fluoropolymer, e.g. as available from Dyneon as FX 5922. This can be added to the outer layer components directly to a level of approximately 20 ppm (wt) to 2000 ppm, preferably 100 to 500 ppm. Alternatively, it can be added to the outer layer blend as part of a masterbatch such that the above level is again present.

The core layer of the multilayer film of the invention must comprise a polypropylene component and a single site catalyst produced LLDPE, preferably mLLDPE component. By use of such a core layer, thinner films than those described in the prior art can be made and used to form laminates. It has been surprisingly found that the stiffness of especially preferred films of the invention actually increases as film thickness is reduced. As a result, even at a thicknesses of <100 µm, preferably 40-80 µm, in some applications even 40-60 µm, films incorporating a core layer as hereinbefore described have a good balance of stiffness (expressed by tensile modulus) and haze properties.

The LLDPE component may be as described above in connection with the outer layers.

The properties of the polypropylene component are not critical and in principle the polypropylene can be selected to be suitable for the desired film or lamination embodiment. E.g. the desired stiffness can be one of the properties for the selection of a suitable polypropylene material.

The polypropylene may also comprise one or more, e.g. two, components which differ from each other, e.g. with respect to MFR and/or comonomer distribution.

The polypropylene component may be a-copolymer or homopolymer of propylene. If it is a copolymer it may be a random or heterophasic (i.e. block) copolymer. The comonomer may be ethylene or a higher comonomer, e.g. a C₄₋₁₂ alpha olefin, although ethylene is preferred. The amount of comonomer incorporated is preferably 1 to 20 wt%, especially 2 to 10 wt%.

Most preferably however, the polypropylene is a homopolymer.

The amount of polypropylene in the core layer should be at least 50% by weight, e.g. at least 60% wt, preferably at least 70 %wt of the core layer, especially at least 80 wt% of the core layer.

Its MFR₂ may range from 0.1 to 5 g/10 min, e.g. 0.2 to 3 g/10min. MFR₂ of 0.5 to 4 g/10 min is also a preferable range.

The LLDPE forms up to 50 wt%, e.g. up to 40 wt% preferably up to 30 wt%, especially up to 20 wt% of the core layer.

The core layer may also comprise conventional additives such as antioxidants, UV stabilisers, acid scavengers, nucleating agents, anti-blocking agents etc as well as polymer processing agent (PPA). As above, the amounts of PPA used may be in the range 0.01 to 1% wt and can be added to the core layer directly or as part of a masterbatch.

Polypropylenes of use in the invention can be manufactured using well known commercial processes and catalysts, e.g. Ziegler-Natta catalysts. Suitable polypropylene polymers are also commercially available from Borealis AS and other suppliers.

Preferably the polypropylene for use in the films of the invention is prepared by a process comprising polymerising propylene, optionally together with one or more comonomers, in the presence of a polymerisation catalyst in a single or a multistage polymerisation process. In case of a multistage polymerisation process one or more polymerisation reactors may be used, which may be the same or different, e.g. at least slurry-slurry, gas phase-gas phase or any combination of slurry and gas phase polymerisations. Each stage may be effected in parallel or sequentially using the same or different polymerisation method.

A highly preferred process for producing the above defined polypropylene includes the steps of:
(a) polymerising in a slurry reactor zone, preferably a loop reactor, propylene, optionally together with one of more comonomers, preferably alpha-olefin comonomers (e.g. ethylene or C ₄₋₁₂ alpha-olefins), in the presence of a polymerisation catalyst to produce the first polymer component, and
(b) polymerising in a gas phase reactor zone propylene, optionally together with one or more comonomers as defined in step (a), in the presence of the reaction product of step (a) to produce a second polymer component, and
(c) recovering the resulting polymer.

A preferred multistage process is a "loop-gas phase"-process, such as that developed by Borealis (known as BORSTAR® technology) and described e.g. in patent literature, such as in EP 0887379 or EP 517868.

In the case of a single stage or multistage process comprising a slurry polymerization, the polymerization may preferably be carried out in the following conditions:
- the temperature is within the range of 40°C to 110°C, preferably between 60°C and 100°C, 70-90 °C,
- the pressure is within the range of 20 bar to 80 bar, preferably between 30 bar to 60 bar,
- hydrogen can be added for controlling the molar mass in a manner known per se.

The slurry, typically bulk, polymerisation is preferably carried out in a loop reactor. In the case of a multistage process, e.g. a loop-gas phase process, the reaction mixture from the slurry (bulk) reactor is transferred to the gas phase reactor, i.e. to step (b) and conditions in step (b) are preferably as follows:
- the temperature is within the range of 50°C to 130°C, preferably between 60°C and 100°C,
- the pressure is within the range of 5 bar to 50 bar, preferably between 15 bar to 35 bar,
- hydrogen can be added for controlling the molar mass in a manner known per se.

As the catalyst for polypropylene polymerisation well known Ziegler Natta (ZN) catalysts are preferred. Any known ZN catalyst can be used. One preferable catalyst is described in US 5234879. In another preferred embodiment the polypropylene is advantageously obtainable using a catalyst prepared according to the emulsion/solidification technology disclosed e.g. in WO 03/000754, WO 03/000757 or WO2004029112 of Borealis.

As well known in the art, nucleating agents may be added to the propylene polymer used in the present invention. These can be e.g. known nucleating agents or the nucleation can be effected during the polymerisation process of the propylene polymer. One way of adding the nucleating agent is to use a catalyst system modified with a nucleating agent as known in the art, e.g. as described in WO 9924478 and WO 9924479.

The films of the invention may have a thickness of 20 to 100 µm, e.g. 40 to 80 µm, preferably 50 to 75 µm. Most especially, the films are less than 80 µm in thickness, e.g. less than 75 µm in thickness, such as less than 70 µm in thickness, e.g. about 60 µm in thickness. The ability to use such narrow films in the formation of laminates is an important aspect of the invention.

As mentioned above, it has been unexpectedly found that in particularly preferred films of the invention film stiffness (as expressed by tensile modulus) actually increases as film thickness is reduced, for example, in the above-mentioned ranges.

The outer layers and core layer may all be of equal thickness. Alternatively the core layer may be thicker than each outer layer or outer layers thicker than the core layer. A convenient film comprises two outer layers which each form 15 to 35% of the thickness of the film, the core layer forming the remaining thickness, e.g. 30 to 70%.

Since each layer of the film uses a polymer mixture, it is important that the different polymer components be intimately mixed prior to extrusion and blowing of the film as otherwise there is a risk of inhomogeneities, e.g. gels, appearing in the film.

The film of the invention will typically be produced by extrusion through an annular die, blowing into a tubular film by forming a bubble which is collapsed between nip rollers after solidification. This film can then be slit, cut or converted (e.g. gusseted) as desired. Conventional film production techniques may be used in this regard. Typically the outer and core layer mixtures will be coextruded at a temperature in the range 160°C to 240°C, and cooled by blowing gas (generally air) at a temperature of 10 to 50°C to provide a frost line height of 1 to 8 times the diameter of the die. The blow up ratio should generally be in the range 1.5 to 4, preferably 2.5 to 3.

The films of the invention exhibit high tensile modulus properties (0.05-1.05%) (ASTM D882) in the machine/transverse direction. These should be at least 750 MPa/700 MPa, especially at least 780/740 MPa, especially for films having thickness of less than 80 µm. Alternatively, the polypropylene material of the core layer can also be chosen to provide lower tensile modulus properties, e.g. 500/500 MPa or more, depending on the desired end application. For such applications e.g. heterophasic polypropylene could be used.

The films may have high strain at break in both machine and transverse directions, e.g. at least 600% in either direction (MD/TD), especially for films having thickness of less than 80 µm.

The films may also have high tensile strength in both machine and transverse directions e.g. at least 32/35 MPa (MD/TD), especially for films having thickness of less than 80 µm.

The films are of very low haze, e.g. less than 15%, preferably less than 10%, especially for films having thickness of less than 80 µm. They also possess excellent gloss, e.g. at least 75, preferably at least 100, especially for films having thickness of less than 80 µm.

The films of the invention have a wide variety of applications but are of particular interest as lamination films for packaging of food and drink, consumer and industrial goods, stand up pouches, labels etc.

Lamination of the films of the invention to a substrate can be effected using well known conditions and adhesives. Thus, a coextruded multilayer film can be glued onto a substrate such as paper, biaxially oriented polypropylene etc in a laminating device.

The films of the invention exhibit various further advantageous properties. They show improved optical properties over films in which a pure mLLDPE is used in the outer layers and pure PP is used in the core layers. The preferred mLLDPE's of the invention have quite broad molecular weight distribution which improves processability and optical properties relative to grades with narrower MWD. The combination of single site catalyst produced LLDPE, especially mLLDPE, and PP in the core layer improves slip migration versus blends in which the core layer comprises PP only.

The presence of LDPE in the outer layers improves punchability. Moreover, the present combination of the mLLDPE and LDPE components in the outer layer improves surface gloss and aesthetics, hence also print appearance.

A further important advantage of the films of the invention is that they may be made thinner than those films described in the prior art and still be formed into laminates. Even at thickness of <100 µm (e.g. <80 µm, especially < 75 µm) the films of the present invention have a good balance of stiffness (expressed by tensile modulus) and haze properties. This is partly due to the fact that it has surprisingly been found that the stiffness of especially preferred films of the invention actually increases as the film thickness is reduced.

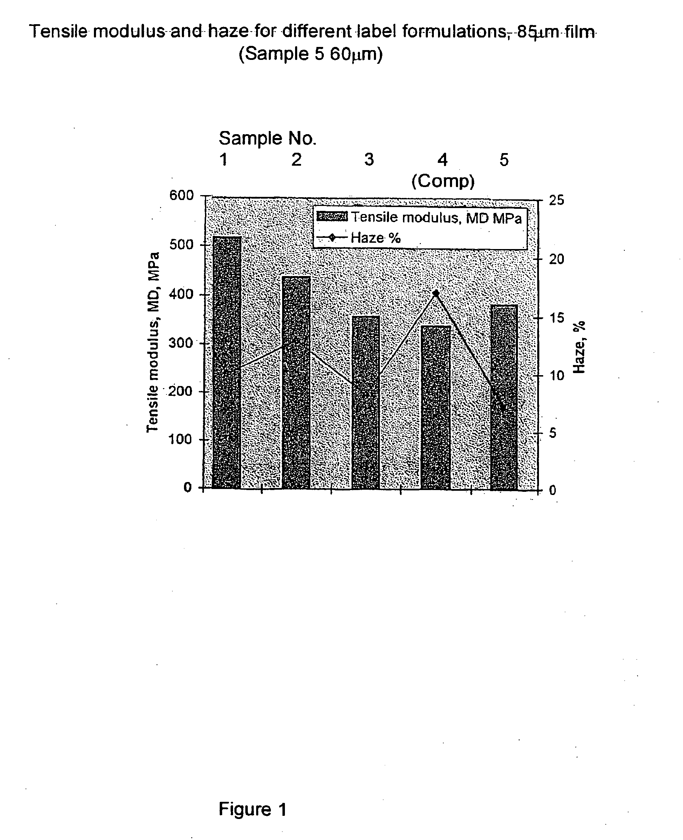

The invention will now be described further with reference to the following non-limiting examples and Figure. Figure 1 plots the tensile moduli and haze properties of films 1 to 5.

### Analytical Tests

Density is measured according to ISO 1183

MFR₂ is measured according to ISO 1133 at 190°C (for polyethylene) or 230°C (for Polypropylene) at loads of 2.16 kg.

MFR₂₁ is measured according to ISO 1133 at 190°C at loads of 21.6 kg.

Mw/Mn/MWD are measured by GPC accodring to the following method:
The weight average molecular weight Mw and the molecular weight distribution (MWD = Mw/Mn wherein Mn is the number average molecular weight and Mw is the weight average molecular weight) is measured by a method based on ISO 16014-4:2003. A waters 150CV plus instrument was used with column 3 x HT&E styragel from Waters (divinylbenzene) and trichlorobenzene (TCB) as solvent at 140 °C. The column set was calibrated using universal calibration with narrow MWD PS standards (the Mark Howings constant K: 9.54*10⁻⁵ and a: 0.725 for PS, and K: 3.92 *10⁻⁴ and a: 0.725 for PE)

Tensile modulus is measured according to ASTM D 882-A, using a 1% secant modulus from 0.05-1.05%, speed 5mm/min.

Tensile Strain at break and tensile strength are measured according to ISO 527-3

Haze is measured according to ASTM D 1003. Gloss is measured according to ASTM D 2457.

### Example 1

The following grades were employed in the manufacture of films. Each of Grades A-K is commercially available from Borealis AS:

**Table 1**

| Grade | Polymer type | Density | MFR2 |
|---|---|---|---|
| A | unimodal mLLDPE | 927 | 1.3 |
| D | HDPE | 956 | 1.5 |
| E | PP random copolymer | 900-910 | 1.5 |
| F | PP heterophasic copolymer | 900-910 | 0.3 |
| G | PP homopolymer | 905 | 2.0 |
| H | LDPE | 927 | 0.75 |
| J | Unimodal mLLDPE | 940 | 6.0 |
| K | unimodal mLLDPE | 934 | 1.3 |

Unimodal mLLDPE, Grade A, was prepared according to the following process:

Ethylene hexene resins were produced using bis(n-butylcyclopentadienyl) hafnium dibenzyl catalyst in a slurry loop reactor at the following conditions:
Pressure 42 bar
C2 amount 4 wt%
C6/C2: 0.5
Temp. 90°C
Residence time: 40 to 60 mins

The resulting polymer has a MFR₂ of 1.3 g/10min and a density of 927 kg/m³. For the preparation of the catalyst system, reference is made to WO2005/002744, preparation example 2.

Grades J and K were prepared as Grade A, but by adjusting the process conditions, e.g. comonomer content and hydrogen feed, in a well known manner to obtain the density and MFR values identified in the above table.

The films were prepared by film blowing at BUR (Blow Up Ratio) 3:1, temperature profile 190-225°C and die gap of 1.2 mm.

All films are 3 layered, the film distribution being 20% : 60% : 20%. The outer layers in each film are identical. The core layer is sandwiched between the outer layers. The prepared films are described in Table 2.

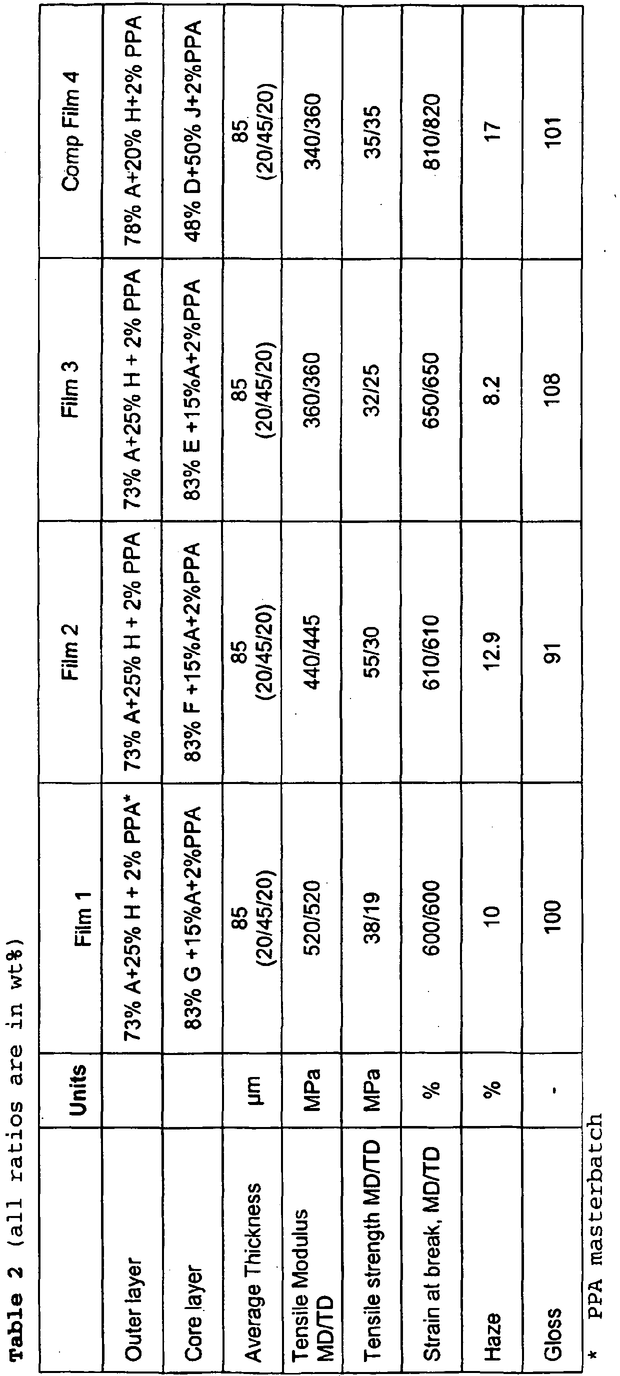

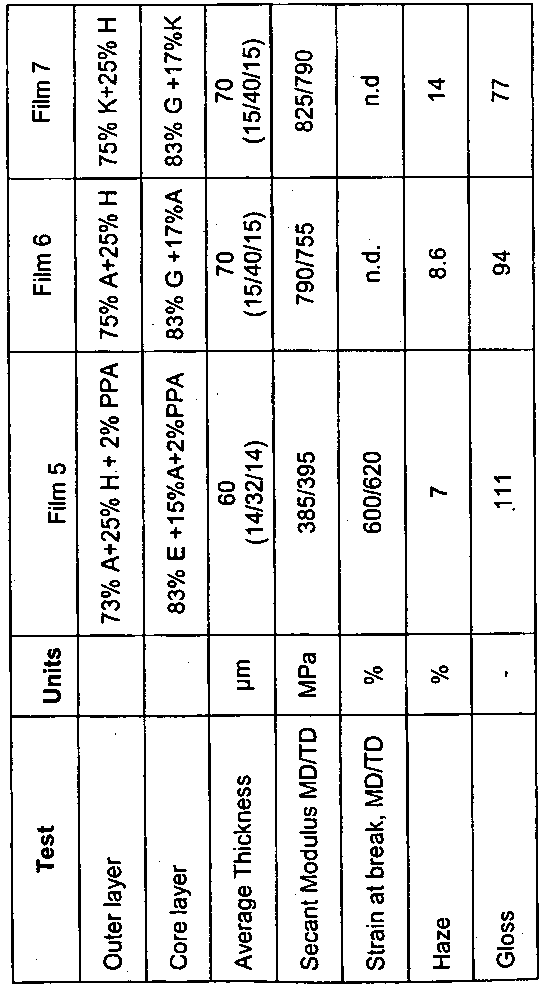

The Haze and tensile modulus properties of films 1 to 5 are shown in Figure 1. It will be noted that Film 5 and Film 3 are made from the same material. Film 5, despite being much thinner, exhibits improved performance. Moreover, the combination of high tensile modulus and low haze is shown for the films of the invention.

### Example 2

The films were prepared according to the method described in example 1.

All films were three layered, the film distribution being 20%:60%:20%. The outer layers in each film were identical. The core layer was sandwiched between the outer layers.

In films 8-19 the outer layers were identical to the outer layers of film 1 of example 1. In films 20-23, which are comparative, the outer layers comprised only polypropylene which was a C2/C4 terpolymer having MFR of 6.0 g/10min (230ºC/2.16 kg, ISO 1133) and Flexural modulus 750 MPa (measured on injection moulded specimen, conditioned at +23°C and 50% relative humidity).

The core layer of films 8-17 of the invention consisted of 15 wt% of single site catalyst produced LLDPE component, which was Grade A, unimodal mLLDPE as described above under example 1, 2 wt% of PPA and 83 wt% polypropylene component, which was homopolymer of propylene as identified in table 3 below. The core layer of films 18 and 19 of the invention was as in films 8-17, except a heterophasic polypropylene as defined in table 3 below was used as the polypropylene component.

The core layer of comparative films 20-23 consisted of 100 wt% of polypropylene component, which was a commercial homopolymer of propylene having MFR₂ of 2 g/10 min (ISO 1133 at 230°C, 2.16 load)and flexural modulus of 1650 MPa (measured with the method and sample as described in table 3 below) in films 20 and 21 and a heterophasic polypropylene having MFR₂ of 3 g/10 min (ISO 1133 at 230°C, 2.16 load) in films 22 and 23. For the preparation of the heterophasic polypropylene of films 22 and 23 reference is made to WO 2004/055101 of Borealis, Polymer 2 in Table 1 of Examples of heterophasic polymers.

The polypropylene component used in the core layer of each film was either a commercial grade available from Borealis (Germany) (trade name and properties identified in table 3, below) or the reference or example for the preparation thereof is provided below.

**Table 3: PP component of the core layer of the films of the invention**

| Film No. | PP component of CORE LAYER | MFR₂ | Flexural modulus |
|---|---|---|---|
| | | ISO 1133^{a)} | ISO 178^{b)} |
| *Unit* | | *g*/*10min* | *MPa* |
| Film 8 | Homo PP | 2 | 1650 |
| | HB300TF™ | | |
| Film 9 | Homo PP | 2 | 1650 |
| | HB300TF™ | | |
| Film 10 | Homo PP obtained from 2-stage polymerisation ^{c)} | 3.2 | |
| Film 11 | Homo PP obtained from 2-stage polymerisation^{c)} | 3.2 | |
| Film 12 | Homo PP HC205TF™ | 4 | 1700 |
| Film 13 | Homo PP | 4 | 1700 |
| | HC205TF™ | | |
| Film 14 | Homo PP | 3.2 | |
| | HC201BF™ | | |
| Film 15 | Homo PP HC201BF™ | 3.2 | |
| Film 16 | Homo PP | 1 | 1200 |
| | HB205TF™ | | |
| Film 17 | Homo PP | 1 | 1200 |
| | HB205TF™ | | |
| Film 18 | Heterophasic pp^{d)} | | |
| Film 19 | Heterophasic pp^{d)} | | |

| | | | |
|---|---|---|---|
| a) determined at 230°C, at load of 2.16 kg b) determined on injection moulded specimens according to ISO/DIS 1873-2 (-94), at 5mm/min c) homopolymer of films 10 and 11 was prepared according to the following method: Two-stage Polymerisation: The catalyst used in the polymerisation was a known, stereospecific transesterified MgCl₂-supported Ziegler-Natta catalyst prepared according to US 5234879. The catalyst was contacted with triethylaluminium (TEAL) as a cocatalyst and an external donor (dicyclopentyl dimethoxysilane) and then prepolymerised in a known manner in the presence of propylene and the cocatalyst in a separate prepolymerisation step. The Al/Ti ratio was 200 mol/mol and Al/donor ratio was 5 mol/mol. The polymerisation was carried out in a continuous multistage process in pilot scale comprising a loop reactor and a fluidised bed gas phase reactor. The propylene and hydrogen were fed together with the activated catalyst into the loop reactor which operated as a bulk reactor at temperature of 85 Cº. The MFR₂ of the obtained loop product was 0.6 g/10 min. Then the polymer slurry stream was fed from the loop reactor into the gas phase reactor and more propylene and hydrogen were fed in the gas phase reactor which was operated at 85 Cº. The split (wt%) between the loop and gas phase reactor was 55:45. The final homopolymer of propylene had MFR₂ as defined in table 3 above. d) For the preparation of the heterophasic PP of films 18 and 19 reference is made to WO 2004/055101 of Borealis, Polymer 2 in Table 1 of Examples of heterophasic polymers. | | | |

**Table 4. The film properties**

| **Film No.** | **Thickness** | **Tensile Modulus MD/TD** | **Tensile strength MD/TD** | **Stress at break MD/TD** | **Haze** | **Gloss** |
|---|---|---|---|---|---|---|
| *Unit* | *µm* | *MPa* | *MPa* | *MPa* | % | - |
| Film 6 | 75 | 790/755 | 50/43 | 29/26 | 8.6 | 94 |
| Film 8 | 63 | 785/785 | 51/25 | 28/28 | 7.9 | 112 |
| Film 9 | 53 | 855/835 | 54/26 | 29/27 | 6.9 | 114 |
| Film 10 | 64 | 815/775 | 53/26 | 28/27 | 10.3 | 106 |
| Film 11 | 54 | 855/815 | 55/28 | 28/27 | 8.5 | 114 |
| Film 12 | 64 | 760/760 | 50/33 | 28/27 | 8.3 | 119 |
| Film 13 | 54 | 815/790 | 52/35 | 28/27 | 7.3 | 120 |
| Film 14 | 64 | 685/670 | 49/48 | 26/25 | 8.8 | 114 |
| Film 15 | 54 | 715/705 | 55/50 | 26/25 | 7.5 | 118 |
| Film 16 | 64 | 685/725 | 55/51 | 27/26 | 9.6 | 108 |
| Film 17 | 52 | 735/750 | 57/50 | 27/26 | 7.7 | 112 |
| Film 18 | 70 | 590/590 | 50/43 | 25/24 | 9.6 | 88 |
| Film 19 | 62 | 630/660 | 50/42 | 25/23 | 8.2 | 98 |
| Comparative Film 20 | 69 | 870/810 | 41/32 | 37/37 | 25.0 | 46 |
| Comparative Film 21 | 58 | 950/910 | 43/32 | 37/37 | 24.0 | 51 |
| Comparative Film 22 | 70 | 760/700 | 37/26 | 33/30 | 25.6 | 40 |
| Comparative Film 23 | 60 | 860/780 | 45/24 | 33/30 | 24.2 | 52 |

It is already known that haze is better for thinner films. However, the above results show that with the present invention thinner films with an improved balance between stiffness and haze properties can be obtained. For instance, a comparison of the properties of films 8 and 9, which are identical in composition, shows that film 9 having a thickness of 53 µm has a higher stiffness and lower haze than film 10 having a thickness of 63 µm. The results also show that films of the invention have an attractive combination of properties, especially a good balance of stiffness and low haze.

## Claims

1. A multilayer film comprising at least three layers, two outer layers and a core layer, each outer layer independently comprising at least 50 wt% of a single site catalyst produced LLDPE component having a density of less than 940 kg/m³ and 3 to 50 wt% of an LDPE component and said core layer comprising at least 50 wt% of a polypropylene component and up to 50 wt% of a single site catalyst produced LLDPE component having a density of less than 940 kg/m³.

2. A film as claimed in claim 1 wherein the LLDPE components of the outer layer and core layer are mLLDPEs.

3. A film as claimed in claim 1 or claim 2 having three layers only.

4. A film as claimed in any preceding claim wherein the outer layers are identical.

5. A film as claimed in any preceding claim wherein the LLDPE components in the film are unimodal.

6. A film as claimed in any preceding claim wherein the LLDPE forms at least 60 wt% of each outer layer.

7. A film as claimed in any preceding claim wherein LLDPE of use in the outer or core layers has a density of 920 to 930 kg/m³.

8. A film as claimed in any preceding claim wherein the outer layers comprise 15 to 30 wt% LDPE.

9. A film as claimed in any preceding claim wherein the polypropylene is a homopolymer.

10. A film as claimed in any preceding claim wherein the polypropylene comprises at least 70 wt% of the core layer.

11. A film as claimed in any preceding claim wherein the LLDPE component used in both core and outer layers is identical.

12. A film as claimed in any preceding claim having a thickness of less than 80 µm.

13. A film as claimed in any preceding claim having a thickness of less than 70 µm.

14. A film as claimed in any preceding claim having a tensile modulus (0.05-1.05%) (ASTM D882) in the machine direction of at least 750 MPa for a film having thickness of less than 80 µm.

15. A process for the preparation of a multilayer film as claimed in any preceding claim comprising coextruding at least 50 wt% of a single site catalyst produced LLDPE component having a density of less than 940 kg/m³ and 3 to 50 wt% of an LDPE component to form two outer layers and at least 50 wt% of a polypropylene component and up to 50 wt% of a single site catalyst produced LLDPE component having a density of less than 940 kg/m³ to form a core layer.

16. A laminate comprising the film of claim 1 to 14.

17. Use of a multilayer film as described in any one of claims 1 to 14 in packaging.

## Patentansprüche

1. Mehrschichtige Folie, die mindestens drei Schichten, zwei äußere Schichten und eine Kernschicht, aufweist, wobei jede äußere Schicht unabhängig voneinander mindestens 50 Gew.-% einer mit einem Katalysator mit einheitlichen aktiven Zentren erzeugten LLDPE-Komponente mit einer Dichte von weniger als 940 kg/m³ und 3 bis 50 Gew.-% einer LDPE-Komponente aufweist und die Kernschicht mindestens 50 Gew.-% einer Polypropylenkomponente und bis zu 50 Gew.-% einer mit einem Katalysator mit einheitlichen aktiven Zentren erzeugten LLDPE-Komponente mit einer Dichte von weniger als 940 kg/m³ aufweist.

2. Folie nach Anspruch 1, wobei die LLDPE-Komponenten der äußeren Schicht und der Kernschicht mLLDPE sind.

3. Folie nach Anspruch 1 oder Anspruch 2, die nur drei Schichten aufweist.

4. Folie nach einem der vorstehenden Ansprüche, wobei die äußeren Schichten identisch sind.

5. Folie nach einem der vorstehenden Ansprüche, wobei die LLDPE-Komponenten in der Folie unimodal sind.

6. Folie nach einem der vorstehenden Ansprüche, wobei das LLDPE mindestens 60 Gew.-% jeder äußeren Schicht ausmacht.

7. Folie nach einem der vorstehenden Ansprüche, wobei das LLDPE für die Verwendung in äußeren Schichten oder der Kernschicht eine Dichte von 920 bis 930 kg/m³ aufweist.

8. Folie nach einem der vorstehenden Ansprüche, wobei die äußeren Schichten 15 bis 30 Gew.-% LDPE aufweisen.

9. Folie nach einem der vorstehenden Ansprüche, wobei das Polypropylen ein Homopolymer ist.

10. Folie nach einem der vorstehenden Ansprüche, wobei das Polypropylen mindestens 70 Gew.-% der Kernschicht ausmacht.

11. Folie nach einem der vorstehenden Ansprüche, wobei die LLDPE-Komponente, die sowohl in der Kernschicht als auch den äußeren Schichten verwendet wird, identisch ist.

12. Folie nach einem der vorstehenden Ansprüche, die eine Dicke von weniger als 80 µm aufweist.

13. Folie nach einem der vorstehenden Ansprüche, die eine Dicke von weniger als 70 µm aufweist.

14. Folie nach einem der vorstehenden Ansprüche, die bei einer Folie mit einer Dicke von weniger als 80 µm einen Zugmodul (0,05 bis 1,05 %) (ASTM D882) in Maschinenrichtung von mindestens 750 MPa aufweist.

15. Verfahren zum Herstellen einer mehrschichtigen Folie nach einem der vorstehenden Ansprüche, umfassend das Coextrudieren von mindestens 50 Gew.-% einer mit einem Katalysator mit einheitlichen aktiven Zentren erzeugten LLDPE-Komponente mit einer Dichte von weniger als 940 kg/m³ und 3 bis 50 Gew.-% einer LDPE-Komponente, um zwei äußere Schichten zu erzeugen, und von mindestens 50 Gew.-% einer Polypropylenkomponente und bis zu 50 Gew.-% einer mit einem Katalysator mit einheitlichen aktiven Zentren erzeugten LLDPE-Komponente mit einer Dichte von weniger als 940 kg/m³, um eine Kernschicht zu erzeugen.

16. Laminat, das die Folie nach den Ansprüchen 1 bis 14 aufweist.

17. Verwendung einer mehrschichtigen Folie nach einem der Ansprüche 1 bis 14 beim Verpacken.

## Revendications

1. Film multicouche comprenant au moins trois couches, deux couches externes et une couche centrale, chaque couche externe comprenant indépendamment au moins 50 % en poids d'un composant de PEBDL produit par catalyseur monosite ayant une masse volumique de moins de 940 kg/m³ et de 3 à 50 % en poids d'un composant de PEBD et ladite couche centrale comprenant au moins 50 % en poids d'un composant de polypropylène et jusqu'à 50 % en poids d'un composant de PEBDL produit par catalyseur monosite ayant une masse volumique de moins de 940 kg/m³.

2. Film selon la revendication 1, dans lequel les composants de PEBDL de la couche externe et de la couche centrale sont des PEBDLm.

3. Film selon la revendication 1 ou la revendication 2 ayant uniquement trois couches.

4. Film selon l'une quelconque des revendications précédentes, dans lequel les couches externes sont identiques.

5. Film selon l'une quelconque des revendications précédentes, dans lequel les composants de PEBDL du film sont unimodaux.

6. Film selon l'une quelconque des revendications précédentes, dans lequel le PEBDL forme au moins 60 % en poids de chaque couche externe.

7. Film selon l'une quelconque des revendications précédentes, dans lequel le PEBDL utilisé dans les couches externes ou centrale a une masse volumique de 920 à 930 kg/m³.

8. Film selon l'une quelconque des revendications précédentes, dans lequel les couches externes comprennent de 15 à 30 % en poids de PEBD.

9. Film selon l'une quelconque des revendications précédentes, dans lequel le polypropylène est un homopolymère.

10. Film selon l'une quelconque des revendications précédentes, dans lequel le polypropylène comprend au moins 70 % en poids de la couche centrale.

11. Film selon l'une quelconque des revendications précédentes, dans lequel le composant de PEBDL utilisé à la fois dans les couches centrale et externes est identique.

12. Film selon l'une quelconque des revendications précédentes, ayant une épaisseur de moins de 80 µm.

13. Film selon l'une quelconque des revendications précédentes, ayant une épaisseur de moins de 70 µm.

14. Film selon l'une quelconque des revendications précédentes, ayant un module d'élasticité en traction (0,05 à 1,05 %) (ASTM D882) dans la direction de la machine d'au moins 750 MPa pour un film ayant une épaisseur de moins de 80 µm.

15. Procédé de préparation d'un film multicouche selon l'une quelconque des revendications précédentes, comprenant la coextrusion d'au moins 50 % en poids d'un composant de PEBDL produit par catalyseur monosite ayant une masse volumique de moins de 940 kg/m³ et de 3 à 50 % en poids d'un composant de PEBD afin de former deux couches externes et au moins 50 % en poids d'un composant de polypropylène et jusqu'à 50 % en poids d'un composant de PEBDL produit par catalyseur monosite ayant une masse volumique de moins de 940 kg/m³ afin de former une couche centrale.

16. Stratifié comprenant le film des revendications 1 à 14.

17. Utilisation d'un film multicouche tel que décrit dans l'une quelconque des revendications 1 à 14 dans un emballage.
